# EUROPEAN PATENT SPECIFICATION

(11) **EP 2 551 566 B1**
(45) Date of publication and mention of the grant of the patent: **04.03.2015**
(21) Application number: 12169857.5
(22) Date of filing: 29.05.2012
(51) Int. Cl.: F16K 5/04

(54) **Rotary valve and rotary valve seal**
Drehventil und Drehventildichtung
Soupape rotative et joint de soupape rotative

(30) Priority: 29.07.2011 US 201113194224
(43) Date of publication of application: 30.01.2013
(73) Proprietor: Hamilton Sundstrand Space Systems International, Inc., Windsor Locks CT 06096-1010 (US)
(72) Inventor: O'Coin, James R., Somers, CT 06071 (US); Papale, William G. Jr., Simsbury, CT 06070 (US)
(74) Representative: Tomlinson, Kerry John

(56) References cited:
- DE-B- 1 198 631
- FR-A5- 2 204 281
- US-A- 2 643 089
- US-A- 3 035 811

## Description

### BACKGROUND OF THE INVENTION

The subject matter disclosed herein relates to valves. More specifically, the subject matter disclosed herein relates to seals for rotary valves.

Rotary valves typically include a housing with an inlet and outlet for flow of a fluid into and out of the valve. The valve typically includes a drum that is rotatable within the housing and may include a hub that is stationary relative to the housing. The drum includes a number of fluid pathways which, depending on their position relative to the inlet and outlet, defines a flow direction through the valve.

In valves of this type, control of leakage in the valve is very important so the flow can be accurately controlled. To that end, the typical rotary valve includes sealing elements located between the drum and the housing wall, and also between the drum and the hub. The seals are intended to reduce the leakage between the components thereby improving performance of the valve.

DE 11 98 631 B discloses a rotary valve having a housing and a drum, with a single-piece unitary drum seal. US 2 643 089 A discloses a rotary valve having a valve body and a rotary plug covered with a resilient material. US 3 035 811 A discloses a rotary valve having a wire reinforced sealing ring. FR 2 204 281 A5 discloses a rotary valve having a unitary seal.

### BRIEF DESCRIPTION OF THE INVENTION

A rotary valve comprises: a housing including an inlet and an outlet; a drum rotatably disposed in the housing and including one or more fluid pathways therethrough to convey fluid flow between the inlet and the outlet; and a single-piece unitary drum seal having a portion disposed around a perimeter of a port of the one or more fluid pathways to seal between the drum and an inner wall of the housing.; and characterized in that an energizer is disposed between the drum seal and the drum to urge the drum seal into contact with the inner wall of the housing.

A drum seal assembly according to the invention is disclosed in claim 14.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of an embodiment of a rotary valve;
FIG. 2 is a partially exploded view of an embodiment of a rotary valve;
FIG. 3 is a perspective view of an embodiment of a rotary valve drum;
FIG. 4 is a cross-sectional view of an embodiment of a rotary valve drum;
FIG. 5 is a perspective view of an embodiment of a drum seal;
FIG. 6 is a perspective view of a portion of an embodiment of a rotary valve drum; and
FIG. 7 is a partial cross-sectional view of another embodiment of a drum seal.

The detailed description explains embodiments of the invention, together with advantages and features, by way of example with reference to the drawings.

### DETAILED DESCRIPTION OF THE INVENTION

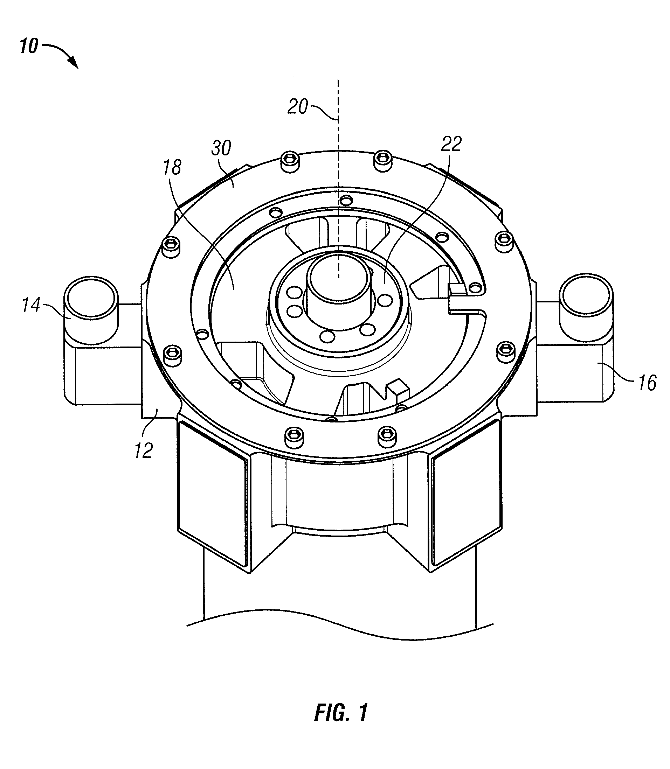

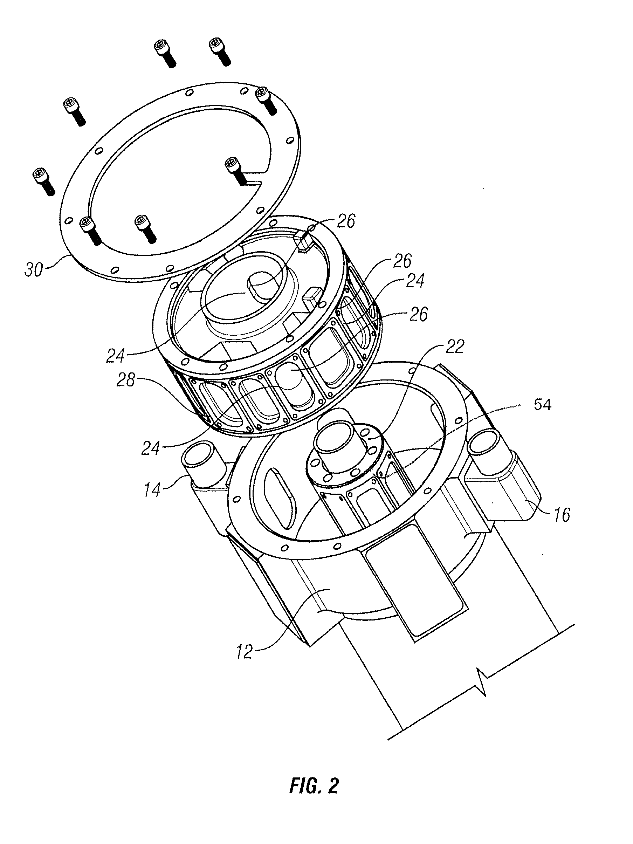

Shown in FIG. 1 is an embodiment of a rotary valve 10. The valve 10 includes a housing 12 with an inlet 14 and an outlet 16 for a fluid flow through the valve 10. A drum 18 is located in the housing 12 and is configured to rotate about a valve axis 20 relative to the housing 12 and a hub 22. In some embodiments, a drum retainer 30 is positioned over at least a portion of the drum 18 and is secured to the housing 12 to retain the drum 18 in the housing 12. Referring to the exploded view of FIG. 2, the drum 18 includes a plurality of flow paths 24 having ports 26 at an outer surface 28 of the drum 18. In some embodiments, the flow paths 24 may extend through the hub 22.

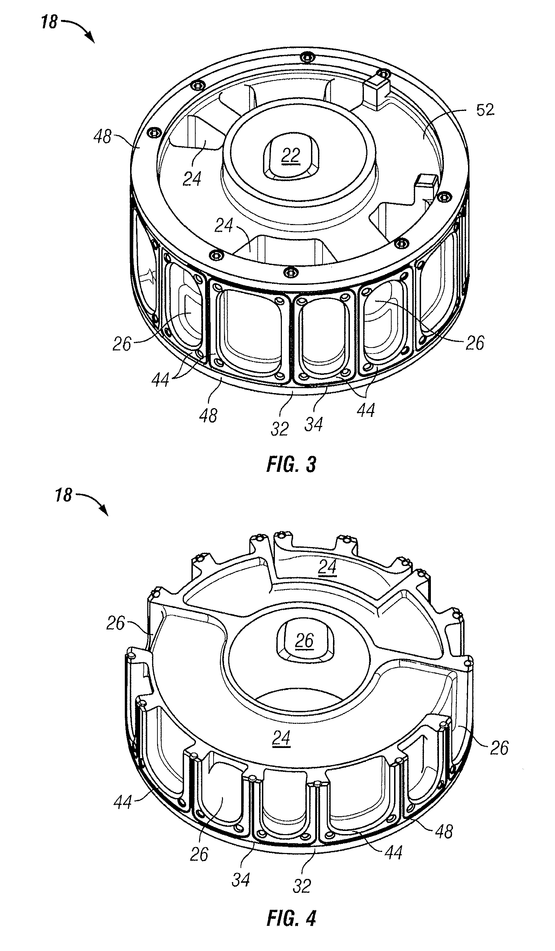

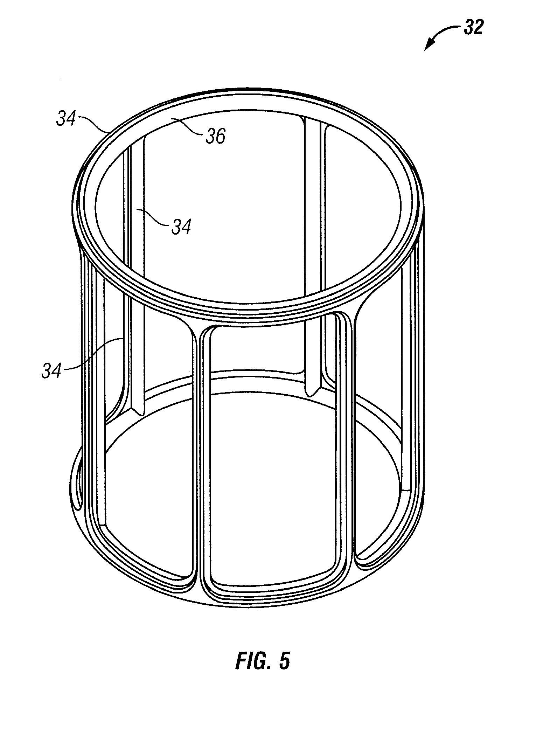

The drum 18 is shown in more detail in FIGs 3 and 4, where the ports 26 and the flow paths 24 are clearly shown. To prevent leakage of flow between the drum 18 and the housing 12, a drum seal assembly 32 is affixed to the drum 18. In other embodiments, the drum seal assembly 32 may be affixed to the housing 12. The drum seal assembly 32, shown best in FIG. 5, includes a drum seal 34 and an energizer 36. The drum seal 34 is a unitary element that extends entirely circumferentially around the drum 18 to prevent leakage externally and also longitudinally along the drum 18, to isolate the ports 26 from each other and thereby prevent leakage internally. In some embodiments, the drum seal 34 may not extend for the entire circumference of the drum 18, but instead only that portion necessary to prevent undesirable leakage. In other embodiments, there could be one or more gaps in circumferential sections of the drum seal 34 where external leakage would not be affected. The unitary seal 34 is configured to surround each of the ports 26. The drum seal 34 is formed from a low friction, wear resistant, rigid material, such as a stiff plastic material. The drum seal assembly 32 also includes an energizer 36, formed from an elastomer or other relatively soft and resilient material. The energizer 36 is, like the drum seal 34, unitary. The energizer 36 matches the overall general shape of the drum seal 34 in its circumferential and longitudinal directions.

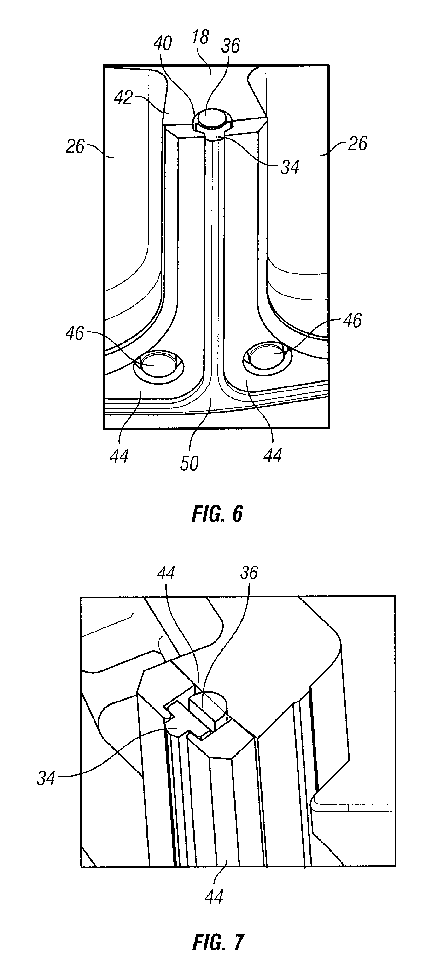

Referring now to FIG. 6, the drum seal assembly 32 is installed into a plurality of seal slots 40 at an outer surface 42 of the drum 18. In other embodiments the outer surface 42 of the drum 18 may be without slots as shown in FIG. 7. The energizer 36 is installed first, then the drum seal 34 is installed over the energizer 36. When installed, the energizer 36 urges the drum seal 34 outwardly toward the housing 12 to seal therewith. In this configuration, the energizer 36 also creates a seal between the drum seal 34 and the energizer 36 and between the energizer 36 and the drum's outer surface 42. The drum seal assembly 32 is retained on the outer surface 42 of the drum 18 by a plurality of seal frames 44. Each seal frame 44 extends around a port 26 and partially overlaps the drum seal 34 to retain the drum seal assembly 32 at the outer surface 42. In embodiments where the drum 18 is without seal slots 40, the seal frames 44 may be thickened to create the cavity for the drum seal 34 and the energizer 36. The seal frames 44 may be secured to the drum 18 by any suitable means, for example screws 46 or other mechanical fasteners. Use of screws 46 or other removable fasteners allows for easy removal of the seal frames 44 to replace the drum seal assembly 32 if desired. The seal frames 44 and the drum seal 34 are configured such that a seal tip 50 extends beyond a radial extent of the seal frames 44 to ensure sealing between the seal tip 50 and the housing 12.

Referring again to FIG. 3, to retain the drum seal assembly 32 at the longitudinal ends of the drum 18, end caps 48 are affixed to the longitudinal ends 52 of the drum 18. The end caps 48 are formed from, for example, a nonmetallic bearing material to resist wear over the life of the valve 10. The end caps 48 serve as guides to keep the drum 18 centered in the housing. The outside diameter of the end caps 48 is greater than the outside diameter created by the complement of seal frames 44 in order to prevent contact between the seal frames 44 and the housing 12 inside diameter. Contact between the seal frames 44 and the housing 12 is undesirable as it might lead to damage to the sealing surface of the housing 12.

Referring again to FIG. 2, a hub seal assembly 54 may be provided to seal between the hub 22 and the drum 18. The hub seal assembly 54 is installed at the hub 22, and is configured substantially identical to the drum seal assembly 32 except the hub seal assembly 54 is scaled to fit between the hub 22 and the drum 18.

While the invention has been described in detail in connection with only a limited number of embodiments, it should be readily understood that the invention is not limited to such disclosed embodiments. While various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A rotary valve comprising:
a housing (12) including an inlet (14) and an outlet (16);
a drum (18) rotatably disposed in the housing (12) and including one or more fluid pathways (24) therethrough to convey fluid flow between the inlet (14) and the outlet (16); and
a single-piece unitary drum seal (34) having a portion disposed around a perimeter of a port (26) of the one or more fluid pathways to seal between the drum (18) and an inner wall of the housing (12); and
**characterized in that** an energizer (36) is disposed between the drum seal (34) and the drum (18) to urge the drum seal into contact with the inner wall of the housing.

2. The rotary valve of claim 1, wherein the drum seal (34) extends around an entire circumference of the drum (18).

3. The rotary valve of claim 1, wherein the drum seal (34) extends around only a portion of the circumference of the drum (18).

4. The rotary valve of claim 1, 2 or 3, wherein the drum seal (34) includes multiple portions, each portion being disposed around a port (26) of the one or more fluid pathways (24).

5. The rotary valve of claim 1, 2, 3, or 4, wherein the drum seal (34) is disposed at an outer surface of the drum (18).

6. The rotary valve of any preceding claim, further wherein the drum seal (34) is disposed in a seal slot (40) of the drum (18).

7. The rotary valve of any preceding claim wherein the energizer is disposed closer to a central valve axis than the drum seal.

8. The rotary valve of any preceding claim, wherein the energizer (36) is a single, unitary element.

9. The rotary valve of any preceding claim, wherein the energizer (36) is formed from an elastomeric material.

10. The rotary valve of any preceding claim, further comprising a seal frame (44) disposed at an outer radial wall of the drum (18) to retain the drum seal (34) at the drum (18).

11. The rotary valve of any preceding claim, further comprising an end cap (30) disposed at a longitudinal end of the drum to retain the drum seal at the drum.

12. The rotary valve of any preceding claim, further comprising a hub (22) disposed in the housing (12) about which the drum (18) is rotatable.

13. The rotary valve of claim 12, including a single-piece unitary hub seal (54) disposed at a perimeter of a port of the one or more fluid pathways to seal between the hub and the drum.

14. A drum seal assembly (32) for a rotary valve of the kind comprising a housing including an inlet and an outlet, and a drum rotatably disposed within the housing and including one or more fluid pathways therethrough, the drum seal assembly comprising:
a single piece, unitary drum seal (34) suitable to be disposed at a drum (18) of a rotary valve,
the drum seal (34) having a portion for extending around a perimeter of a port (26) of one or more fluid pathways (24) of the drum (18) for sealing between the drum (18) and an inner wall of the housing (12); and **characterized by**
the assembly further comprising an energizer (36) suitable to be disposed between the drum seal (34) and the drum (18) for urging the drum seal into contact with the inner wall of the housing.

15. A drum seal assembly (32) as defined in claim 14 including the feature(s) of any of claims 2 to 11.

## Patentansprüche

1. Drehventil, umfassend:
ein Gehäuse (12) mit einem Einlass (14) und einem Auslass (16);
eine Trommel (18), die drehbar im Gehäuse (12) angeordnet ist und einen oder mehrere Fluidwege (24) durch sie hindurch aufweist, um einen Fluidfluss zwischen dem Einlass (14) und dem Auslass (16) zu leiten; und
eine einteilige einstückige Trommeldichtung (34) mit einem Abschnitt, der um einen Umfang eines Anschlusses (26) des einen oder der mehreren Fluidwege herum angeordnet ist, um eine Dichtung zwischen der Trommel (18) und einer Innenwand des Gehäuses (12) herzustellen; und
**dadurch gekennzeichnet, dass** ein Energieversorger (36) zwischen der Trommeldichtung (34) und der Trommel (18) angeordnet ist, um die Trommeldichtung in Kontakt mit der Innenwand des Gehäuses zu bringen.

2. Drehventil nach Anspruch 1, wobei sich die Trommeldichtung (34) um einen Gesamtumfang der Trommel (18) erstreckt.

3. Drehventil nach Anspruch 1, wobei sich die Trommeldichtung (34) nur um einen Teil des Umfangs der Trommel (18) erstreckt.

4. Drehventil nach Anspruch 1, 2 oder 3, wobei die Trommeldichtung (34) mehrere Abschnitte aufweist, wobei jeder Abschnitt um einen Anschluss (26) des einen oder der mehreren Fluidwege herum angeordnet ist.

5. Drehventil nach Anspruch 1, 2, 3 oder 4, wobei die Trommeldichtung (34) um eine Außenfläche der Trommel (18) herum angeordnet ist.

6. Drehventil nach einem der vorangehenden Ansprüche, wobei die Trommeldichtung (34) ferner in einem Dichtungsschlitz (40) der Trommel (18) angeordnet ist.

7. Drehventil nach einem der vorangehenden Ansprüche, wobei der Energieversorger näher an einer zentralen Ventilachse als die Trommeldichtung angeordnet ist.

8. Drehventil nach einem der vorangehenden Ansprüche, wobei der Energieversorger (36) ein einzelnes, einstückiges Element ist.

9. Drehventil nach einem der vorangehenden Ansprüche, wobei der Energieversorger (36) aus einem Elastomermaterial gebildet ist.

10. Drehventil nach einem der vorangehenden Ansprüche, ferner umfassend einen Dichtungsrahmen (44), der an einer äußeren Umfangswand der Trommel (18) angeordnet ist, um die Trommeldichtung (34) an der Trommel (18) zu halten.

11. Drehventil nach einem der vorangehenden Ansprüche, ferner umfassend eine Endkappe (30), die an einem Längsende der Trommel angeordnet ist, um die Trommeldichtung an der Trommel zu halten.

12. Drehventil nach einem der vorangehenden Ansprüche, ferner umfassend eine Nabe (22), die in dem Gehäuse (12) angeordnet ist und um die die Trommel (18) drehbar ist.

13. Drehventil nach Anspruch 12, aufweisend eine einteilige einstückige Nabendichtung (54), die an einem Umfang eines Anschlusses des einen oder der mehreren Fluidwege angeordnet ist, um eine Dichtung zwischen der Nabe und der Trommel herzustellen.

14. Trommeldichtungsbaugruppe (32) für ein Drehventil der Art, das ein Gehäuse mit einem Einlass und einem Auslass und eine Trommel umfasst, die drehbar innerhalb des Gehäuses angeordnet ist und einen oder mehrere Fluidwege durch sie hindurch aufweist, wobei die Trommeldichtungsbaugruppe Folgendes umfasst:
eine einteilige einstückige Trommeldichtung (34), die dazu geeignet ist, an einer Trommel (18) eines Drehventils angeordnet zu sein,
wobei die Trommeldichtung (34) einen Abschnitt zum Erstrecken um einen Umfang eines Anschlusses (26) des einen oder der mehreren Fluidwege (24) der Trommel (18) aufweist, um eine Dichtung zwischen der Trommel (18) und einer Innenwand des Gehäuses (12) herzustellen; und **dadurch gekennzeichnet, dass**:
die Baugruppe ferner einen Energieversorger (36) umfasst, der dazu geeignet ist, zwischen der Trommeldichtung (34) und der Trommel (18) angeordnet zu sein, um die Trommeldichtung in Kontakt mit der Innenwand des Gehäuses zu bringen.

15. Trommeldichtungsbaugruppe (32) nach Anspruch 14, aufweisend das Merkmal/die Merkmale nach einem der Ansprüche 2 bis 11.

## Revendications

1. Soupape rotative comprenant :
un carter (12) comprenant une entrée (14) et une sortie (16) ;
un tambour (18) disposé à rotation dans le carter (12) et comprenant au moins une voie d'écoulement de fluide (24) à travers celui-ci, pour acheminer un écoulement de fluide entre l'entrée (14) et la sortie (16) ; et
un joint de tambour (34) unitaire d'une seule pièce comportant une partie disposée autour d'un périmètre d'un orifice (26) de l'au moins une des voie d'écoulement de fluides, afin de produire l'étanchéité entre le tambour (18) et une paroi intérieure du carter (12);et
**caractérisée en ce qu'**un activateur (36) se trouve entre le joint de tambour (34) et le tambour (18) pour pousser le joint de tambour en contact avec la paroi intérieure du carter.

2. Soupape rotative selon la revendication 1, dans laquelle le joint de tambour (34) s'étend autour d'une circonférence entière du tambour (18).

3. Soupape rotative selon la revendication 1, dans laquelle le joint de tambour (34) s'étend autour d'une partie de la circonférence du tambour (18) seulement.

4. Soupape rotative selon la revendication 1, 2 ou 3, dans laquelle le joint de tambour (34) comprend de multiples parties, chaque partie étant disposée autour d'un orifice (26) de l'au moins une voie d'écoulement de fluide (24).

5. Soupape rotative selon la revendication 1, 2, 3 ou 4, dans laquelle le joint de tambour (34) est disposé au niveau d'une surface extérieure du tambour (18).

6. Soupape rotative selon l'une quelconque des revendications précédentes, dans laquelle en outre le joint de tambour (34) est disposé dans une fente pour joint (40) du tambour (18).

7. Soupape rotative selon l'une quelconque des revendications précédentes, dans laquelle l'activateur est disposé plus près d'un axe central de soupape que le joint de tambour.

8. Soupape rotative selon l'une quelconque des revendications précédentes, dans laquelle l'activateur (36) est un élément simple, unitaire.

9. Soupape rotative selon l'une quelconque des revendications précédentes, dans laquelle l'activateur (36) est formé à partir d'un matériau élastomère.

10. Soupape rotative selon l'une quelconque des revendications précédentes, comprenant en outre un cadre de joint (44) disposé au niveau d'une paroi radiale extérieure du tambour (18) pour retenir le joint de tambour (34) au niveau du tambour (18).

11. Soupape rotative selon l'une quelconque des revendications précédentes, comprenant en outre un couvercle d'extrémité (30) disposé au niveau d'une extrémité longitudinale du tambour pour retenir le joint de tambour au niveau du tambour.

12. Soupape rotative selon l'une quelconque des revendications précédentes, comprenant en outre un moyeu (22) disposé dans le carter (12) et autour duquel le tambour (18) peut tourner.

13. Soupape rotative selon la revendication 12, comprenant un joint à moyeu unitaire d'une seule pièce (54) disposé au niveau d'un périmètre d'un orifice d'au moins une voie d'écoulement de fluides pour étancher entre le moyeu et le tambour.

14. Ensemble (32) formant un joint de tambour destiné à une soupape rotative du type comprenant un carter comprenant une entrée et une sortie, et un tambour disposé à rotation à l'intérieur du carter et contenant au moins une voie d'écoulement de fluide à travers celui-ci, l'ensemble formant un joint de tambour comprenant :
un joint de tambour d'une seule pièce, unitaire (34) convenant pour être disposé au niveau d'un tambour (18) d'une soupape rotative,
le joint de tambour (34) comportant une partie destinée à s'étendre autour d'un périmètre d'un orifice (26) d'au moins une voie d'écoulement de fluides (24) du tambour (18), afin d'étancher entre le tambour (18) et une paroi intérieure du carter (12) ; et **caractérisé par**
**le fait que** l'ensemble comprend en outre un activateur (36) qu'on peut disposé entre le joint de tambour (34) et le tambour (18) afin de pousser le joint de tambour en contact avec la paroi intérieure du carter.

15. Ensemble (32) formant un joint de tambour selon la revendication 14, qui présente la ou les caractéristiques de l'une quelconque des revendications 2 à 11.
